# EUROPEAN PATENT APPLICATION

(11) **EP 2 043 232 A2**
(43) Date of publication of application: **01.04.2009**
(21) Application number: 08152233.6
(22) Date of filing: 26.09.2005
(51) Int. Cl.: H02K 3/50

(54) **Electric terminal for direct connection to an electrical wire and male electrical terminal**

(30) Priority: 30.09.2004 IT PD20040239
(62) Divisional of application: 05108835.9
(71) Applicant: Inarca S.p.A., 35010 Vigodarzere (PD) (IT)
(72) Inventor: Boischio, Ido, 35100 Padova (IT)
(74) Representative: Modiano, Micaela Nadia

(57) **Abstract**

The present invention comprises an electrical terminal for direct connection to an electrical wire, which comprises, at one end, a portion (237) for crimping to an electrical lead and, at the opposite end, a base (239) on which a portion (238) for direct electrical contact with an electrical wire is formed. The electrical contact portion (238) is provided with a self-centering tapered seat (231) for accommodating the electrical wire.

## Description

The present invention relates to an assembly for connecting the stator windings of an electric motor of a compressor for electrical household appliances to the respective power supply leads.

In assembly lines of electrical household appliances provided with a compressor, such as for example refrigerators, freezers, etc, there is the need to wire the stator windings of the motors of the compressors to the electric power supply.

One known method for wiring the stator windings of a compressor of a refrigerator consists in connecting manually, by means of connecting straps, the ends of the windings to the ends of the power supply leads, each of which is typically covered by a sleeve made of rock wool.

A shell provided with separate receptacles, with front openings into which the straps with the wired leads are to be inserted, is then coupled to the laminations of the stator.

Such shell is provided, in a rear region, with a tab suitable to be locked between two coils of the stator and lateral wings, which are contoured so as to follow the curvature of the stator and are useful to "bind" the shell to said stator.

A shell of this type is disclosed for example in WO98/01933.

The stator windings are therefore preformed in a donut-like shape on the two opposite end faces of the lamination pack of the stator.

Once the connecting straps have been inserted manually in the receptacles of the shell, the wings are bound to the stator.

Once binding has been performed (generally automatically, by means of an apparatus which passes a needle with a binding thread below the "donut" of the windings and around the wings), the final forming of the "donut" of the windings occurs in order to make them compact and stable.

Finally, the correct flow of electric current is checked.

It is evident that an assembly operation of this type is extremely laborious and is poorly suitable for introduction in automated cycles for the assembly of refrigerators.

The manual operation for fixing the ends of the windings to the ends of the power supply leads also entails, as a preliminary step, the elimination of the protective enamel from the ends of the windings.

These operations, i.e., enamel elimination, manual connection of the ends, and insertion thereof in the shell, are extremely laborious, with a considerable expenditure of time, accordingly leading to substantial production costs.

The aim of the present invention is to provide an assembly for connecting the stator windings of the electric motor of a compressor that solves the problems highlighted in the wiring of compressors of electrical household appliances with the respective power supplies.

Within this aim, an object of the present invention is to provide an assembly for connecting the stator windings of the electric motor of a compressor that allows to reduce the time required to wire the stator windings of a compressor for electrical household appliances to the respective power supply.

Another object of the present invention is to provide an assembly for connecting the stator windings of the electric motor of a compressor that allows to increase the degree of automation in the assembly of the components related to compressors of electrical household appliances.

A further object of the present invention is to provide an assembly for connecting the stator windings of the electric motor of a compressor that can be manufactured with known systems and technologies.

This aim and these and other objects, which will become better apparent hereinafter, are achieved by an assembly for connecting the stator windings of an electric motor of a compressor for electric household appliances to the respective power supply leads, characterized in that it comprises a single connection shell provided with means for anchoring to the stator of the compressor, said shell being provided with longitudinal recesses for accommodating and stably locking respective electrical terminals, which can be crimped onto the power supply leads of the compressor and can be connected electrically to the ends of the stator windings, said recesses being provided, at one end, with the inputs for said terminals and, at the opposite end, with passages to allow electrical connection between said terminals and the ends of the stator windings, said shell having, at said passages, respective channels for accommodating respective ends of the stator windings, said channels being elongated substantially at right angles to said recesses and further having respective openings on the opposite side with respect to the side on which said passages are formed, said longitudinal recesses, when said shell is fixed to the stator, being substantially parallel to the tangent to the outer surface of said stator in the anchoring region of said shell.

Advantageously, the invention comprises a method for wiring the stator windings of the electric motor of a compressor, particularly for refrigerators and the like, which comprises the steps of:
- coupling to the stator a connection shell with electrical terminals preinserted and locked stably therein, said terminals being crimped to the power supply leads of the stator,
- placing the ends of the stator windings in electrical contact with said electrical terminals,
- fixing said connection shell to said stator.

Further characteristics and advantages of the invention will become better apparent from the following detailed description of some preferred but not exclusive embodiments thereof, illustrated by way of non-limiting example in the accompanying drawings, wherein:
Figure 1 is a perspective view of a stator with a connection assembly according to a first embodiment of the invention associated therewith;
Figure 2 is a partially sectional side view of a portion of the stator, with a connection assembly according to a first embodiment of the invention associated therewith;
Figure 3 is a partially sectional front view of a portion of the stator with a connection assembly according to the first embodiment of the invention associated therewith;
Figure 4 is a top view of a portion of a stator with a connection assembly according to the first embodiment of the invention associated therewith;
Figure 5 is a front view of a female electrical terminal of the connection assembly according to the first embodiment of the invention;
Figure 6 is a front view of a male electrical connection tab to be inserted in the female electrical terminal of Figure 5, according to the first embodiment of the invention;
Figure 7 is an electrical diagram of the connection of the stator windings to the connection assembly according to the first embodiment of the invention;
Figure 8 is a partially sectional side view of a portion of a stator with a connection assembly according to a variation of the first embodiment of the invention associated therewith;
Figure 9 is a partially sectional side view of a portion of the stator with a connection assembly according to a second embodiment of the invention associated therewith;
Figure 10 is a front view of an electrical terminal of the connection assembly according to the second embodiment of the invention;
Figure 11 is an electrical diagram of the connection of the stator windings to the connection assembly according to the second embodiment of the invention;
Figure 12 is a partially sectional side view of a portion of the stator with a connection assembly according to a first variation of the second embodiment of the invention associated therewith;
Figure 13 is a top view of a portion of the stator with a connection assembly according to the first variation of the second embodiment of the invention associated therewith;
Figure 14 is an axonometric view of the connection shell of the connection assembly according to the first variation of the second embodiment of the invention;
Figure 15 is a partially sectional side view of a portion of the stator with a connection assembly according to a second variation of the second embodiment of the invention associated therewith;
Figure 16 is an axonometric view of the connection shell of the connection assembly according to the second variation of the second embodiment of the invention.

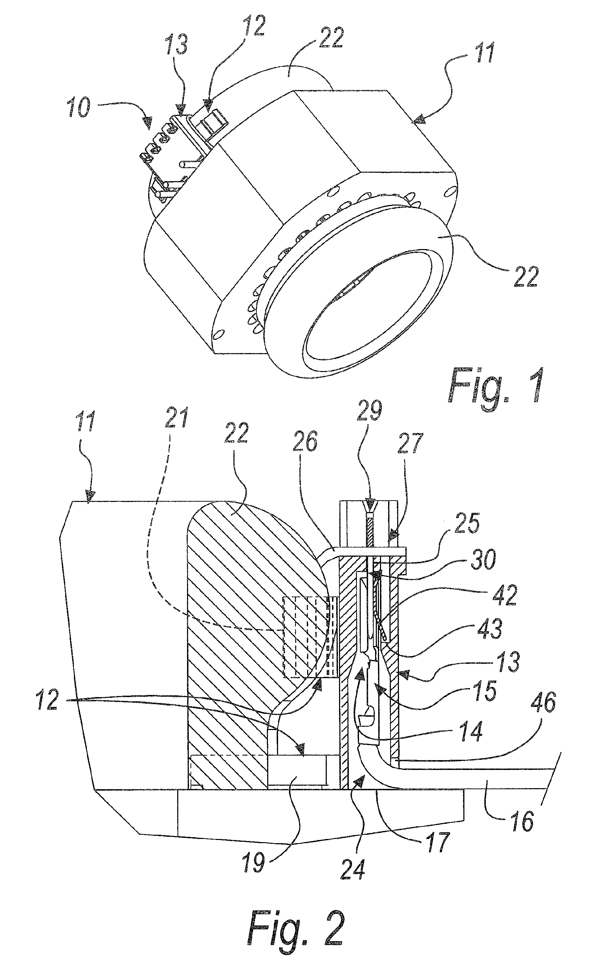

With reference to Figures 1 to 7, a first embodiment of the assembly for connecting the stator windings of the electric motor of a compressor for electrical household appliances to the respective power supply leads, according to the invention, is generally designated by the reference numeral 10.

The connection assembly 10 can be anchored, as shown in the cited figures, to a stator 11 by way of anchoring means 12 described hereinafter.

The connection assembly 10 substantially comprises a connection shell 13, provided with longitudinal recesses 14 (which are mutually parallel) for stably locking and accommodating respective electrical terminals 15, which are crimped to power supply leads 16 of the stator 11 of the electric motor and are electrically connected to the stator 11.

The main body of the connection shell 13 is substantially shaped like a parallelepiped having a quadrangular cross-section in plan view.

The anchoring means 12 are constituted by a surface 17 for resting against a base 18 of the lamination pack of the stator 11.

An anchoring tab 19 protrudes from the main body of the shell 13 at said surface 17, substantially parallel thereto, and can be inserted by interlocking between coils 20 of the stator 11.

Two wings 21 protrude from the lateral sides of the connection shell 13 and are curved so as to follow substantially the curvature of the coils 20 of the stator 11.

The wings 21 are suitable to bind the connection shell 13 to stator windings 22 (shown schematically in the figures as a solid block), by way of binding cables, which are designated schematically in the figures by means of the reference numeral 23.

The longitudinal recesses 14 for stably locking and accommodating the electrical terminals 15 are substantially perpendicular to the contact surface 17 of the shell 13.

The longitudinal recesses 14 have, at one end, inputs 24 for the insertion of the terminals 15 and, at the opposite end, passages 25 to allow electrical connection between the terminals 15 and ends 26 of the stator windings 22.

As shown by the figures, the inputs 24 for the terminals 15 in the longitudinal recesses 14 are formed at the end of the shell 13 that lies closest to the contact surface 17.

At such passages 25, the shell 13 has respective channels 27 for accommodating respective ends 26 of the stator windings 22.

The channels 27 lie substantially at right angles to the longitudinal recesses 14 and accordingly the ends 26 of the stator windings 22, once connected to the connection assembly 10, are substantially perpendicular to the longitudinal recesses 14 and to the respective electrical contact portions 28 of the terminals 15.

The channels 27 are provided with respective openings 29 on the opposite side with respect to the side on which the passages 25 are formed.

In practice, with the shell 13 fixed to the stator 11, the longitudinal recesses 14 are substantially parallel to the tangent to the outer surface of the stator 11 in the region for anchoring the shell 13 (in this embodiment, they are substantially parallel to the axis of the stator).

In a configuration for anchoring to the stator of this type there is no part of said stator that overlaps the openings 29.

In this first embodiment, the electrical terminals 15 can be associated electrically with the ends 26 of the stator windings 22 provided in the channels 27 of the shell 13 by interposing respective electrical connection tabs 30, which are inserted, through the openings 29 of the channels 27, in the passages 25 of the longitudinal recesses 14.

In practice, the terminals 15 are "female" terminals and the electrical connection tabs 30 are "male terminals", which mate with the terminals 15.

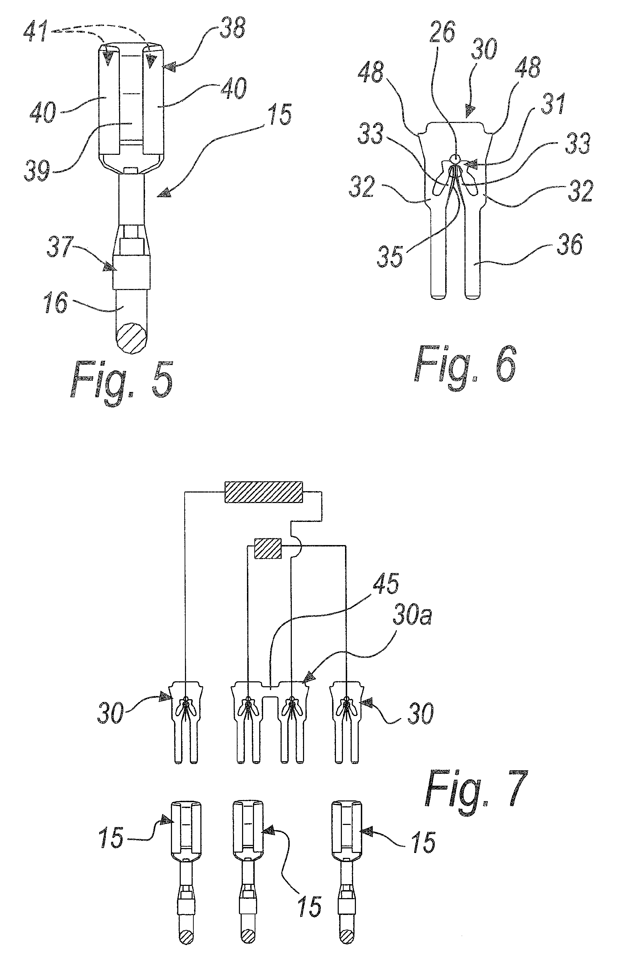

As shown clearly in Figure 6, the electrical connection tabs 30 are provided with self-centering tapered seats 31 for accommodating the respective ends 26 of the stator windings 22.

In particular, each electrical connection tab 30 is constituted by mutually opposite fins 32, which are folded on the same plane of arrangement as the tabs 30, with free ends 33 which mutually converge at the axis of said tab so as to form said self-centering tapered seat 31 for accommodating a respective end 26 of the stator windings 22.

In particular, the mutually opposite fins 32 are shaped, at the mutually facing edge portions, so as to form blades 35 suitable to cut into the enamel that coats the ends 26 of the stator windings.

Two parallel elongated laminas 36 for coupling to the corresponding male terminal 15 provided in the underlying longitudinal recess 14 protrude parallel to the axis of the electrical connection tab 30 from the mutually opposite fins 32 substantially in the opposite direction with respect to the free ends 33.

Respective teeth 48 for anchoring to the shell 13 are provided on the lateral edges of the connection region of the mutually opposite fins 32.

Each female terminal 15 (as clearly shown in Figure 5) is constituted, at one end, by a portion 37 for crimping to the power supply leads 16 and, at the opposite end, by an electrical contact portion 38, which in this first embodiment is constituted by a base 39 provided with sides 40 which are folded toward the inside of said base so as to form two stable locking and insertion seats 41 for the elongated laminas 36.

The base 39 further has a tongue 42, which is folded toward the outside of the plane of the base and is suitable to form an extraction-preventing locator, which can be arranged in abutment against an internal protrusion 43 of the corresponding longitudinal recess 14.

The insertion of the terminal 15 in the corresponding longitudinal recess 14 thus occurs with an elastic deformation of the tongue 42.

In the description (in the examples that follow, as well), the expression "longitudinal recess" is used mainly to reference the part of the internal recess of the shell in which the electrical contact portion 38 is inserted.

In this embodiment, the shell 13 has substantially four longitudinal recesses 14.

The longitudinal recesses 14 are mutually separated by means of walls 44.

Three of these recesses 14, in particular, the two outermost recesses and a central recess, are occupied by the terminals 15.

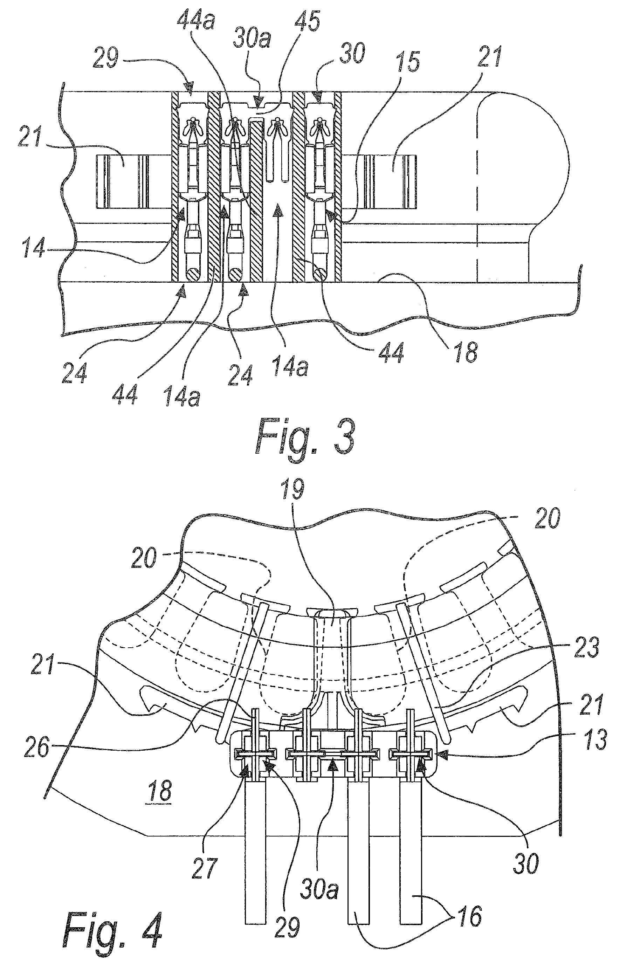

The terminals 15 that occupy the outermost recesses are associated with a respective electrical connection tab 30, while the terminal 15 inserted in one of the innermost longitudinal recesses, designated by the reference numeral 14a, mates with an electrical connecting bridge tab 30a (see Figures 3 and 7), which in practice is constituted by two electrical connection tabs 30 which are connected laterally, at the teeth, by a common bridge 45 and are in practice formed monolithically by means of a progressive blanking die.

The electrical connecting bridge tab 30a is inserted, with each corresponding tab, in the corresponding passage of the two central longitudinal recesses 14a.

In this manner, a bridge-like connection is provided with the stator windings, as shown in the connection diagram of Figure 7.

To allow the insertion of the bridge 45 of the electrical connecting bridge tab 30a, the central wall 44a for separating the central longitudinal recesses 14a has a hollow in the end region that lies furthest from the contact surface 17.

Hollows 46 are provided at the terminal edge of the shell 13 that lies proximate to the inputs 24 of the longitudinal recesses 14 (one is shown in Figure 2), said hollows being suitable for the passage of the power supply leads 16 crimped to the respective terminals 15.

In these embodiments, the hollows 46 are therefore three, one for each longitudinal recess in which there is a terminal 15.

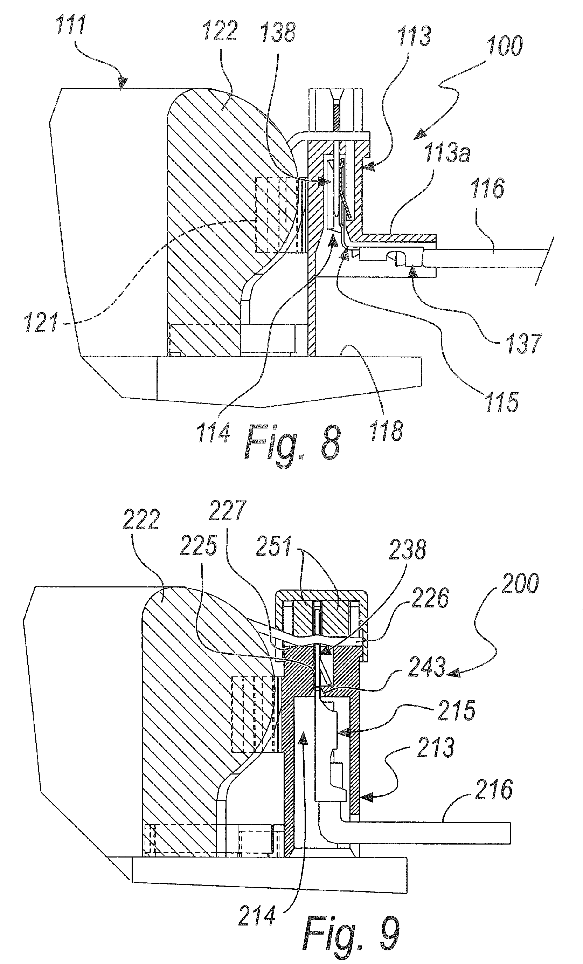

A variation of the first embodiment is shown in Figure 8 and is generally designated by the reference numeral 100.

This variation differs from the preceding one in that the connection shell, now designated by the reference numeral 113, is substantially folded in an L-shape in its part related to the exit of the power supply leads 116.

Consequently, the terminals 115 also are folded in an L-shape (the crimping portions 137 are folded in an L-shape with respect to the electrical contact portions 138).

In particular, the shell 113 has a box-like portion 113a, which lies at right angles to the longitudinal recesses 114.

The seats (not designated by reference numerals in the figures) for the portions 137 for crimping to the power supply leads 116 are formed in said box-like portion 113 a.

With this configuration, there is space between the base 118 of the stator 111 and the main body of the shell 113.

In this manner, the needle of the machine that is designed to bind the shell 113 to the stator windings 122 is facilitated in its passage around the wings 121.

A second embodiment of the connection assembly according to the invention is shown in Figures 9, 10 and 11 and is generally designated by the reference numeral 200.

The second embodiment 200 differs from the preceding embodiment 10 (and the corresponding variation 100) substantially in that the electrical contact between the terminals and the ends of the stator windings is provided directly by such terminals.

In this second embodiment, the electrical terminals, now designated by the reference numeral 215, have respective electrical contact portions 238 which protrude from the longitudinal recesses 214 through the passages 225 and are thus arranged in the channels 227, in which the ends 226 of the stator windings 222 are accommodated.

The terminals 215 are therefore each constituted by a portion 237 for crimping to the power supply leads 216 and by the electrical contact portion 238.

Each electrical contact portion 238 is provided advantageously, by analogy with the electrical connection tabs of the first embodiment, with self-centering tapered seats 231 for accommodating the respective ends 226 of the stator windings 222 formed on a base 239.

In particular, the electrical contact portion 238 is constituted by mutually opposite wings 232, which are folded on the same plane of arrangement as said electrical contact portion 238 (plane of the base 239), with free ends 233 which mutually converge at the axis of said base so as to form said self-centering tapered seat 231 for accommodating respective ends 226 of the stator windings 222.

In particular, the mutually opposite fins 232 are contoured, at the mutually facing edge portions, so as to form blades 235 suitable to cut into the enamel that covers the ends 226 of the stator windings.

The base 239 is further provided with a tongue 242, which is folded toward the outside of the surface of the base and is suitable to form an extraction-preventing locator, which can be arranged in abutment against an internal protrusion 243 of the corresponding longitudinal recess 214.

The insertion of the terminal 215 in the corresponding longitudinal recess 214 thus occurs with an elastic deformation of said tongue 242.

Respective protrusions 248 for the interlocking of the terminal 215 in the shell 213 are provided on the lateral edges of the region connecting the mutually opposite fins 232 and are obtained for example by connecting the terminals during their production by blanking in a progressive die.

A cover 250 is associated with the connection shell 213 and is fixed by way of elastically deformable fixing means (not shown in the figures), above the channels 227, substantially so as to cover them.

The cover 250 is provided with locators 251, which are inserted in the channels 227 and are suitable to prevent the movement of the ends 226 of the stator windings 222 in the direction for extraction of said cover 250.

The cover 250 is designed substantially to prevent accidental separation of the ends 216 of the stator windings 222 from the respective self-centering tapered seats 231 in which electrical contact with the terminals 215 is ensured.

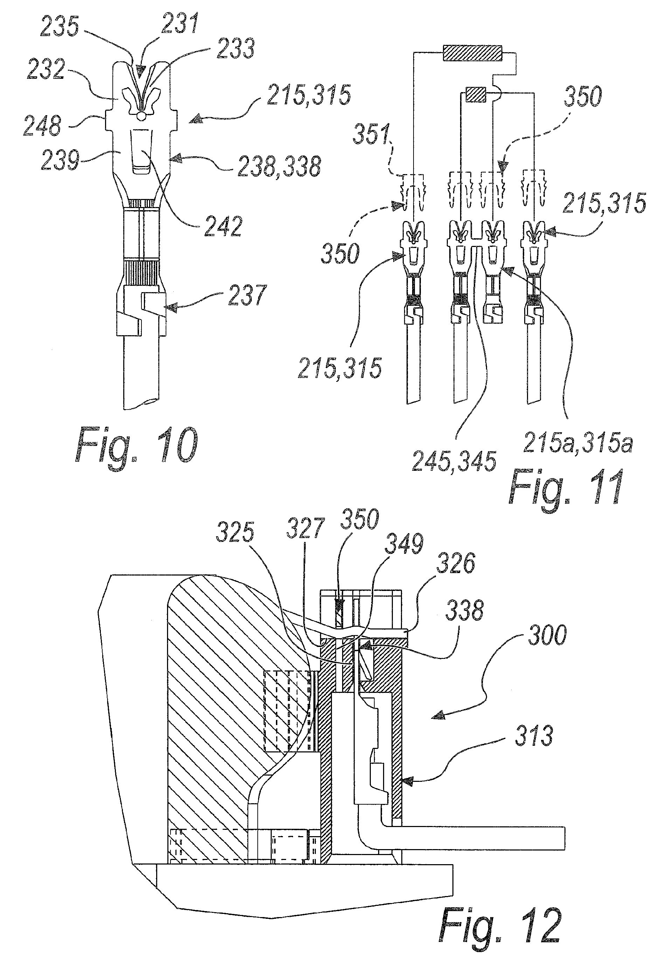

In this second embodiment, the electrical diagram of the connection of the terminals to the stator windings is identical to the one of the first embodiment: in practice, two terminals 215 are arranged on the lateral longitudinal recesses of the shell 213 and a bridge terminal 215a is arranged centrally on the two central longitudinal recesses (not shown in the figures). Reference should be made to Figure 11 in this regard.

The bridge terminal 215a is constituted by two terminals 215, which are connected laterally, at the respective protrusions 248, by a common bridge 245 and are provided in practice monolithically by means of a progressive blanking die.

A first variation of the second embodiment of the connection assembly 200 is shown in Figures 12, 13 and 14 and is generally designated by the reference numeral 300.

Such first variation differs from the second described embodiment 200 simply in that it does not comprise the cover that avoids accidental separation of the ends of the stator windings from the respective self-centering tapered seats.

In this variation 300, the connection shell 313 comprises, parallel to the passages 325 for the electrical contact portions 338 of the terminals 315 and astride the channels 327, insertion seats 349 for respective laminas 350, which are U-shaped and provided with extraction-preventing means, such as for example lateral teeth 351 formed on the edges of the lateral portions of the U-shape formed by each lamina 350 (reference should be made to Figure 11).

The U-shaped contour of the laminas is shown in dashed lines in Figure 11; the electrical connection diagram of this variation is identical to the one described earlier, and the terminals 315 also are the same (reference should be made to Figure 10).

Such laminas 350 are suitable to block in the channels 327 the ends 326 of the stator windings 322; this is achieved by virtue of the central part of the U-shape formed by each lamina 350, which transversely overlaps the ends 326, preventing movements so as to exit from the self-centering seats of the terminals 315.

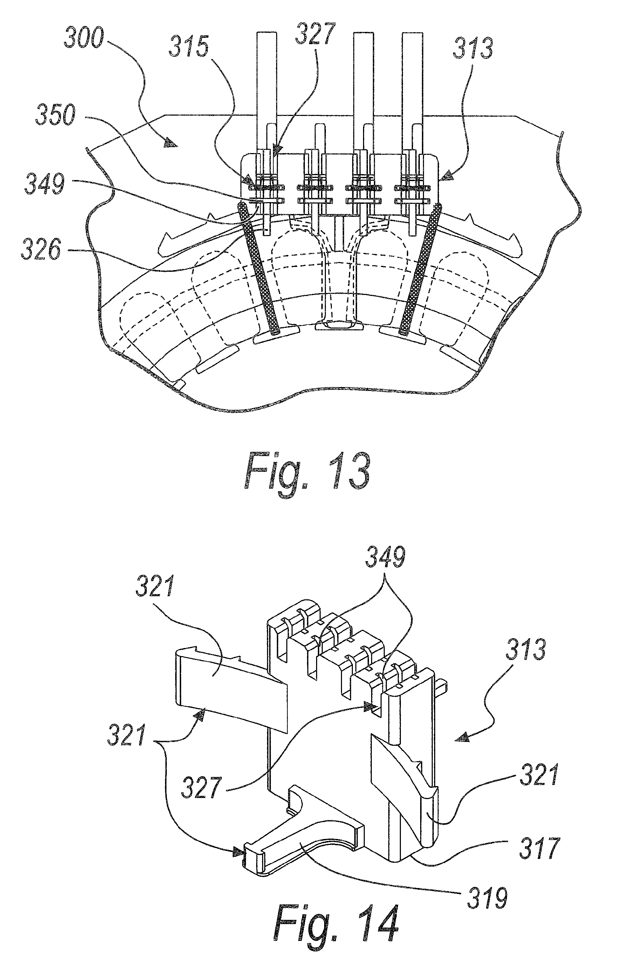

Figure 14 clearly illustrates the anchoring means, here designated by the reference numeral 312, of the shell 313.

The anchoring means are substantially identical for all the embodiments and corresponding variations and are constituted by the contact surface 317 at the base of the stator, by the anchoring lug 319, which can be inserted by interlocking between the coils of the stator, and by the wings 321.

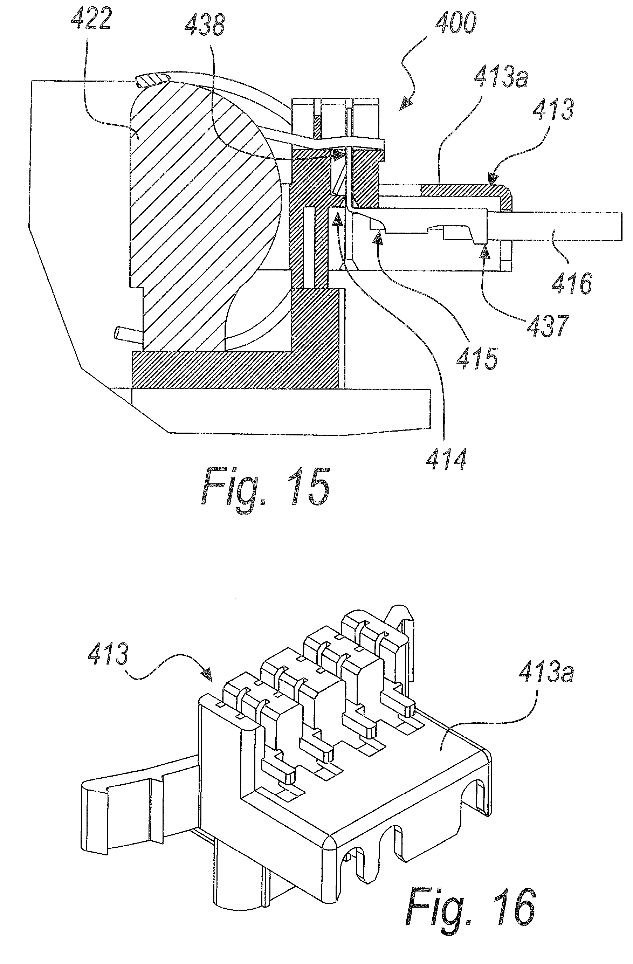

A second variation of this second described embodiment is shown in Figures 15 and 16 and is generally designated by the reference numeral 400.

Such second variation 400 differs from the preceding first variation 300 in that the connection shell, now designated by the reference numeral 413, is substantially folded into an L-shape in its part related to the exit of the power supply leads 416.

Accordingly, the terminals 415 also are L-shaped (the crimping portions 437 are folded into an L-shape with respect to the electrical contact portions 438).

In particular, the shell 413 is provided with a box-like portion 413a, which protrudes at right angles with respect to the longitudinal recesses 414.

The seats (not designated by reference numerals in the figures) for the portions 437 for crimping to the power supply leads 416 are formed in such box-like portion 413 a.

With this configuration, there is space between the base 418 of the stator 411 and the main body of the shell 413.

In this manner, the needle of the machine designed to bind the shell 413 to the stator windings 422 is facilitated in its passage around the wings 421.

It should be stressed that the electrical contact portions 438 are identical to the ones described earlier for the second embodiment.

It is evident that the characteristics of the described embodiments of the corresponding variations can be combined with each other according to the requirements of the configuration, always remaining within the scope of the described general inventive concept.

Connection assemblies such as the ones described allow considerable production advantages, in particular as regards the steps for wiring the power supply of the electric motor of the compressor of the electrical household appliance.

As clearly shown by the following method for wiring the stator windings of the electric motor of a compressor, which uses a connection assembly such as the ones described, the time required for the operations is in fact reduced greatly with respect to the time required by methods performed with known techniques, also by virtue of the possibility to automate these wiring operations in a simple manner.

By using a connection assembly according to the invention (the reference numerals of the first described embodiment will be referenced hereinafter), a method for wiring the stator windings of the electric motor of a compressor, particularly for refrigerators and the like, consists in coupling to the stator 11 the connection shell 13 with electrical terminals 15 reinserted and stably locked therein and crimped to the power supply leads 16 of the stator 11.

This is done by inserting the anchoring lug 19 between the coils 20 of the stator 11, so that the contact surface 17 is the base 18 of the stator.

The terminals 13 are crimped to the power supply leads 16 and are already inserted in the shell 13.

The operator arranges the ends 26 of the stator windings 22 proximate to the terminals 13. In particular, he arranges the ends 26 in the channels 27.

The ends 26 of the stator windings 22 are then placed in electrical contact with the electrical terminals 15.

This is done by moving the connection tabs 30 toward the terminals 15 by virtue of a pressing action produced by presser means (such as for example a small vertical press, not shown in the figures, which is preferably actuated automatically).

The connection tabs 30 are in fact associated with said presser means according to a position that is aligned with the passages 25.

In this manner, the insertion of the elongated laminas 36 of the connection tabs 30 in said terminals 15 is allowed by means of the passages 25, with simultaneous insertion, in the respective tapered self-centering seats 31 of the ends 26 of the stator windings 22 and simultaneous mechanical removal of the enamel that covers the ends 26 by the blades 35 of said connection tabs 30.

Simultaneously with the pressing action that produces electrical contact between the terminals 15 and the ends 26 of the stator windings 22, there is an action for cutting the excess wires of the windings, which exit from the channels 27; this cutting action occurs for example by means of the descent of a blade (also not shown in the figures), the movement of which is coordinated with the movement of the presser means.

Once the electrical connection has been achieved, the connection shell 13 is fixed to the stator windings 22 by virtue of binding operations, which are performed by means of binding cables 23 wound between the wings 21 and said windings.

With reference to the second described embodiment of the connection assembly according to the invention, since the electrical connection tabs are not provided, the electrical connection between the terminals 215 and the ends 226 is provided directly by direct insertion of said ends 226 in the self-centering tapered seats 231 of said terminals 215.

In this case, the presser means that perform the pressing action suitable to produce electrical contact between the terminals and the windings is performed by a small guillotine press (not shown in the figures), which acts above the ends 16, moving them into the self-centering tapered seats 231.

The cover 250 is then inserted.

In the case of the variation with U-shaped laminas 350, said laminas are inserted in the corresponding seats 349.

The small press also causes the translational motion of the laminas 350 within the seats 349, further locking the ends 326.

It is therefore convenient, in order to provide this wiring method, to arrange the ends of the stator windings between the presser means and the electrical contact portions of the terminals in a direction that is substantially transverse to the pressing direction of the presser means.

In practice it has been found that the invention thus described solves the problems noted in the connection of the stator windings of the electric motor of a compressor for electrical household appliances to the power supply according to known techniques; in particular, the present invention provides a connection assembly that allows to reduce the time required for wiring the stator windings to the respective power supply leads.

Further, the present invention provides an assembly for connecting the stator windings of a compressor that allows to increase the degree of automation in the assembly of the components related to compressors of electrical household appliances.

All this has been achieved by revolutionizing the wiring method.

The introduction of connection shells with internal recesses provided with preinserted electrical terminals allows to save the time required for manual connection (by means of the connecting straps) of the ends of the windings to the ends of the leads of the power supply and subsequent insertion in the connection shell fixed to the stator.

These operations can be automated in a production line, with considerable time and labor savings.

The structure of the connection shell is such that the connection between the terminals and the ends of the stator windings occurs on an end of said shell that is substantially not superimposed on the stator.

In this manner, it is possible to use presser means to produce the electrical connection.

The use of terminals and tabs with self-centering tapered seats, invented specifically to provide said connection assembly, facilitates considerably the step for electrical connection according to automated procedures.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to the requirements and the state of the art.

The disclosures in Italian Patent Application No. PD2004A000239 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electrical terminal for direct connection to an electrical wire, **characterized in that** it comprises, at one end, a portion (237) for crimping to an electrical lead and, at the opposite end, a base (239) on which a portion (238) for direct electrical contact with an electrical wire is formed, said electrical contact portion (238) being provided with a self-centering tapered seat (231) for accommodating the electrical wire.

2. The electrical terminal according to claim 1, **characterized in that** said electrical contact portion (238, 338), is constituted by mutually opposite fins (232), which are folded on the same plane of arrangement as said electrical contact portion (238, 338), with free ends (233) which mutually converge at the axis of the base (239) so as to form said self-centering tapered seat (231) for accommodating the electrical wire, said mutually opposite fins (232) being shaped, at the mutually facing edge portions, so as to form blades (235) suitable to cut into said electrical wire.

3. The electrical terminal according to claim 2, **characterized in that** said base (239) is provided with a tongue (242), which is folded toward the outside of the surface of said base (239) and is suitable to provide a locator for preventing extraction from the shell in which it can be inserted.

4. An electrical terminal for bridge connections, **characterized in that** it comprises two electrical terminals (215a, 315a) according to one or more of claims 1 to 3, which are connected laterally by a bridge (245, 345) and are formed monolithically.

5. A male electrical terminal for mutually connecting an electrical wire and a male electrical terminal, **characterized in that** it comprises an electrical connection tab (30) which is provided with a self-centering tapered receptacle (31) for accommodating an electrical wire, said electrical connection tab (30) being constituted by mutually opposite fins (32), which are folded on the same plane of arrangement as said tab (30), with free ends (33) which mutually converge at the axis of said tab so as to form said self-centering tapered seat (31), said mutually opposite fins (32) being shaped at the mutually facing edge portions so as to form blades (35) that are suitable to cut into the electrical wire, parallel to the axis of the electrical connection tab (30), two parallel elongated laminas (36) protruding from said mutually opposite fins (32) substantially in the opposite direction with respect to the free ends (33) for coupling to a complementary male terminal.

6. A male electrical terminal according to claim 5, **characterized in that** respective teeth (48) for anchoring to the shell in which said terminal can be inserted are provided on the lateral edges of the connecting region of said mutually opposite fins (32).

7. A male electrical terminal for bridge connections, **characterized in that** it comprises two electrical terminals (30a) according to one of claims 5 or 6, which are connected laterally by a bridge (45) and are formed monolithically.
